# FASCICULE DE BREVET EUROPEEN

(11) **EP 4 314 495 B1**
(45) Date de publication et mention de la délivrance du brevet: **11.02.2026**
(21) Numéro de dépôt: 22717222.8
(22) Date de dépôt: 23.03.2022
(51) Int. Cl.: F01D 25/02

(54) **CONE D'ENTREE POUR UNE TURBOMACHINE D'AERONEF, TURBOMACHINE D'AÉRONEF ET PROCÉDÉ D'UTLISATION D'UNE TURBOMACHINE**
EINLAUFKEGEL FÜR EINE FLUGZEUGTURBOMASCHINE, FLUGZEUGTURBOMASCHINE UND VERFAHREN ZUM EINSATZ EINER TURBOMASCHINE
INLET CONE FOR AN AIRCRAFT TURBOMACHINE, AIRCRAFT TURBOMACHINE AND METHOD FOR USING A TURBOMACHINE

(30) Priorité: 25.03.2021 FR 2103001
(43) Date de publication de la demande: 07.02.2024
(73) Titulaire: SAFRAN AIRCRAFT ENGINES, 75015 Paris (FR)
(72) Inventeur: LOUIS, Alban François, 77550 MOISSY-CRAMAYEL (FR); PICART, Jean-Yves, 77550 MOISSY-CRAMAYEL (FR); BALLAND, Morgan, 77550 MOISSY-CRAMAYEL (FR); GODIN, Florent Robert André, 77550 MOISSY-CRAMAYEL (FR); ACHBARI, Baghdad, 77550 MOISSY-CRAMAYEL (FR)
(74) Mandataire: Gevers & Orès
(86) Numéro de dépôt international: PCT/FR2022/050536
(87) Numéro de publication internationale: WO 2022/200733

(56) Documents cités:
- EP-A1- 3 572 642
- FR-A1- 2 943 725
- US-A1- 2016 003 146
- US-A1- 2016 122 034

## Description

### Domaine technique de l'invention

Le domaine de la présente invention est celui des turbomachines, notamment celui des moteurs à turbine à gaz, par exemple et non limitativement un turboréacteur ou un turbopropulseur d'aéronef.

La présente invention concerne plus particulièrement un cône d'entrée d'air pour une turbomachine.

### Arrière-plan technique

L'état de la technique comprend notamment le document US-A1-2016/122034 et le document EP-A1-3572642.

Il est connu de l'état de la technique des turbomachines s'étendant suivant un axe longitudinal et comprenant, d'amont en aval, dans le sens d'écoulement des gaz, une soufflante, un ou plusieurs étages de compresseurs (par exemple un compresseur basse pression et un compresseur haute pression), une chambre de combustion, un ou plusieurs étages de turbine (par exemple, une turbine haute pression et une turbine basse pression), et une tuyère d'échappement des gaz.

De manière classique, de telles turbomachines comprennent, en outre, en amont un cône d'entrée d'air qui est monté sur la soufflante, par exemple par l'intermédiaire d'une virole amont généralement annulaire elle-même reliée à un arbre de compresseur basse pression de la turbomachine. La liaison entre le cône d'entrée et la virole amont est généralement réalisée par l'intermédiaire d'assemblages boulonnés. L'extrémité aval de la virole affleure les plateformes des aubes de soufflante, en se situant dans la continuité aérodynamique avant de celle-ci.

Un tel cône d'entrée comprend une extrémité amont de forme conique ou elliptique centrée sur un axe de rotation du cône d'entrée, correspondant également à l'axe longitudinal de la soufflante et de l'ensemble de la turbomachine.

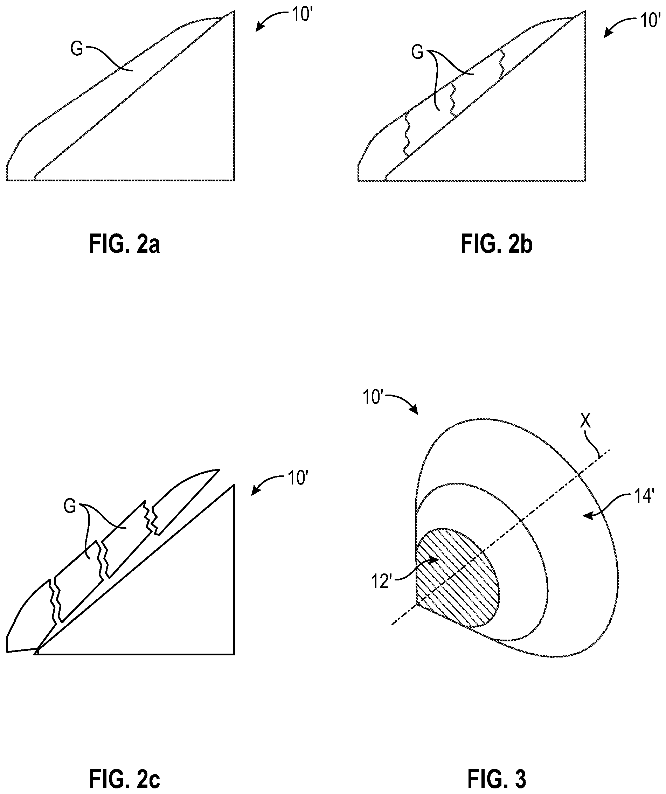

Ce cône d'entrée est connu pour être un point de la turbomachine favorisant l'accrétion de glace notamment lorsque la turbomachine est en régime stabilisé, tel qu'illustré sur la figure 2a. De ce fait, la glace se formant sur le cône d'entrée pourrait atteindre une taille élevée avant de se décrocher en gros morceaux de glace, notamment lors des phases d'accélération de la turbomachine, tel qu'illustré sur les figures 2b et 2c. Ces gros morceaux de glace présentent un risque, lorsqu'ils finissent par se désolidariser du cône, d'endommager les aubes de soufflante qu'ils percutent ou les éléments se trouvant plus en aval des aubes soufflantes.

L'amas de glace peut également s'accumuler de manière inégale sur le cône d'entrée et entraîner ainsi des vibrations indésirables de la turbomachine.

Afin de pallier ce problème, il a été proposé d'implanter un système de dégivrage dont le but est de faire en sorte que la glace accrétée sur la pointe de cône soit éjectée avant d'atteindre une taille critique. Cependant, ce type de système est couteux en termes de masse et d'encombrement, et surtout particulièrement délicat à mettre en place en raison de la nature tournante du cône d'entrée qui en est équipé.

Il a également été proposé de réaliser, tel qu'illustré sur la figure 3, un cône d'entrée 10' avec une pointe amont 12' en matériau souple et un corps aval 14' en matériau rigide. En fonctionnement, la couche de glace accrétée notamment au niveau de la liaison entre la pointe et le corps, est fragilisée pour favoriser le détachement de la glace. Or, cette façon de détacher la couche de glace, en fragilisation et laissant les fissures se propager le long de cette couche, peut être plus lente que prévue dans le cas du fonctionnement en vol de la turbomachine. En effet, plus la taille de la couche de glace est élevée, plus la formation de fissures sur cette couche est lente et difficile. Par ailleurs, la génération de fissures directement entre la partie du cône en matériau souple et la glace accrétée, notamment à basse température (à savoir entre -30°C et 15°C) n'est pas suffisante puisque l'adhérence de la glace sur le cône est plus forte que la force de détachement de la glace par centrifuge. Une telle solution n'est donc pas suffisante pour détacher rapidement en plusieurs morceaux de taille réduite de la couche de glace se formant sur le cône d'entrée sans endommager les composants de la turbomachine en aval du cône.

Dans ce contexte, il est intéressant de proposer une solution permettant de pallier les inconvénients de l'art antérieur, notamment en mettant en place une nouvelle géométrie d'un cône d'entrée d'air favorisant davantage la rupture maîtrisée de la glace en fonctionnement.

### Résumé de l'invention

La présente invention propose ainsi un cône d'entrée pour une turbomachine d'aéronef, ce cône d'entrée étant configuré pour être entraîné en rotation autour d'un axe X et comportant un corps de forme conique ou elliptique et sur lequel est susceptible de se former de la glace, ledit corps ayant au moins une première portion réalisée dans un premier matériau appelé matériau rigide, et au moins une seconde portion réalisée dans un second matériau qui a une dureté inférieure à celle dudit premier matériau et qui est appelé matériau souple.

Selon l'invention, ladite première portion est monobloc et formée d'une pluralité de tronçons axiaux reliés entre eux par des cloisons s'étendant suivant une direction longitudinale par rapport à l'axe X, lesdits tronçons et lesdites cloisons définissant entre eux des logements, et en ce que ledit corps comprend plusieurs secondes portions situées dans lesdits logements, ces secondes portions étant configurées pour se déformer élastiquement en direction radiale par rapport à l'axe X lors de l'entrainement en rotation du cône.

Cette conception de la présente invention permet de faciliter la réduction de la taille de la glace accrétée sur le cône d'entrée de la turbomachine en fonctionnement, pour limiter les impacts du phénomène de désaccrétion de la glace sur la turbomachine.

Pour cela, le cône comprend plusieurs secondes portions et une unique première portion. Les secondes portions sont réalisées dans un matériau souple ou élastiquement déformable (tel qu'un élastomère), de façon à permettre à chaque seconde portion de se déformer et de se déplacer radialement (par rapport à l'axe X) lors de la mise en rotation du cône, et également de continuer à fonctionner aux variations de température externe (tel que par exemple une température basse de -30°C à 15°C). Ceci favorise donc le fractionnement des accrétions de glace se formant sur la surface externe du cône. La première portion est réalisée dans un matériau rigide (tel que l'aluminium), de façon à former un support de base unique et stable pour contenir les secondes portions.

Selon la configuration de l'invention, les secondes portions sont séparées l'une des autres par les tronçons axiaux et/ou les cloisons de la première portion. Ceci présente l'avantage de former un corps du cône avec un motif alterné entre un matériau rigide de la première portion et un matériau souple des secondes portions.

En fonctionnement (au sol ou en vol de la turbomachine) et lorsque de la glace est accrétée sur le cône, un écart de déformation (ou déplacement) sous forces centrifuges des secondes portions est observé vis-à-vis de la première portion. Cet écart génère des contraintes dans la glace à l'interface des matériaux rigide et souple. Ceci favorise une fragmentation et un détachement maîtrisé de la glace en plusieurs morceaux au niveau de chacune des interfaces du motif alterné du corps du cône. Ainsi, les morceaux de glace détachés sont de taille calibrée et acceptable pour être projetés sur des composants en aval du cône (tels que les aubes de soufflante) sans les endommager.

Par ailleurs, les morceaux de glace détachés sont libérés régulièrement et en plusieurs fois. En effet, par exemple, lors des phases d'accélération de la turbomachine, la glace située à plus haut rayon du cône se détache en premier par rapport à celle située sur la pointe du cône.

L'invention présente par conséquent l'avantage de reposer sur une conception simple, offrant une très grande fiabilité, et peu pénalisante en termes de coûts et d'encombrement.

Le cône d'entrée pour la turbomachine d'aéronef selon l'invention peu comprendre une ou plusieurs caractéristiques suivantes, prises isolément les unes des autres ou en combinaison les unes avec les autres :
- ledit corps comprend une extrémité formant une pointe réalisée dans ledit second matériau ;
- chacun des logements a une forme générale en arc de cercle autour de l'axe, et les secondes portions sont configurées pour combler complètement ces logements ;
- chacune des secondes portions présente un module de Young comprise entre 1 et 10 MPa, et de préférence de 1 à 4 MPa ;
- chacune des secondes portions présente une épaisseur maximale comprise entre 2 et 10mm, de préférence de 4 à 6 mm, l'épaisseur étant mesurée dans une direction longitudinale par rapport à l'axe X ;
- chacune des secondes portions comprend une surface externe présentant un rayon maximal comprise entre 20 et 100mm, de préférence de 40 à 80 mm, le rayon étant mesuré par rapport à l'axe X ;
- chacune des secondes portions présente une densité comprise entre 500 et 1500 Kg/m³, et de préférence de 1200 Kg/m³ ;
- chaque tronçon axial est un secteur angulaire compris entre 10 et 90° ;
- chaque portion souple est réalisée en élastomère, silicone, caoutchouc ou polytétrafluoroéthylène (PTFE) ;
- ladite portion rigide est réalisée en matériau composite ou métallique, par exemple en aluminium.

La présente invention a également pour objet une turbomachine d'aéronef, comportant un cône d'entrée selon l'invention.

La présente invention porte également sur un procédé d'utilisation d'une turbomachine selon l'invention, dans lequel ledit cône est mis en rotation soit à une première vitesse V1 qui est au moins supérieure à 5000 tours/minute, ou à une seconde vitesse V2 qui est inférieure à ladite première vitesse V1. Selon l'invention, lorsque ledit cône tourne à la première vitesse V1, les portions souples sont configurées pour fragmenter de la glace déposée sur le cône, en se déplaçant radialement par rapport à l'axe X, et lorsque ledit cône tourne à la seconde vitesse V2 ou est à l'arrêt, les portions souples sont immobiles.

Le déplacement radial desdites portions souples peut être supérieur à 0,02 mm, de préférence compris entre 0,02 et 0,2 mm.

La présente invention concerne également un aéronef comportant une turbomachine selon l'invention

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig.1] la figure 1 est une demi vue schématique en coupe axiale d'une turbomachine d'aéronef, selon l'un des modes de réalisation de l'invention,
[Fig.2a] la figure 2a représente schématiquement une demi vue en coupe axiale d'une accrétion de glace sur un cône d'entrée de l'art antérieur,
[Fig.2b] la figure 2b représente schématiquement une demi vue en coupe axiale d'une fragmentation de la glace du cône d'entrée de la figure 2a,
[Fig.2c] la figure 2c représente schématiquement une demi vue en coupe axiale d'un détachement de morceaux de glace de tailles aléatoires et élevées du cône d'entrée de la figure 2a,
[Fig.3] la figure 3 est une vue schématique en perspective avant d'un cône d'entrée de l'art antérieur,
[Fig.4] la figure 4 est une vue schématique en perspective avant d'un cône d'entrée selon un premier mode de réalisation de l'invention,
[Fig.5a] la figure 5a représente schématiquement une demi vue en coupe axiale d'une accrétion de glace sur le cône d'entrée de la figure 4,
[Fig.5b] la figure 5b représente schématiquement une demi vue en coupe axiale d'une fragmentation de la glace du cône d'entrée de la figure 5,
[Fig.5c] la figure 5c représente schématiquement une demi vue en coupe axiale d'un détachement de morceaux de glace de tailles maîtrisées et réduites du cône d'entrée de la figure 4,
[Fig.6] la figure 6 illustre un graphique représentant un déplacement radial des secondes portions du cône de l'invention en fonction des régimes de rotation du cône.

### Description détaillée de l'invention

Par convention dans la présente demande, les termes « intérieur » et « extérieur », et « interne » et « externe » sont définis radialement par rapport à un axe longitudinal X du moteur d'aéronef de la turbomachine. Ainsi, un cylindre s'étendant selon l'axe X comporte une face intérieure tournée vers l'axe du moteur et une surface extérieure, opposée à sa surface intérieure. On entend par « axial » ou « axialement » toute direction parallèle à l'axe X et par « transversalement » ou « transversal » toute direction perpendiculaire à l'axe X. De même, les termes « amont » et « aval » sont définis par rapport au sens de circulation de l'air dans la turbomachine.

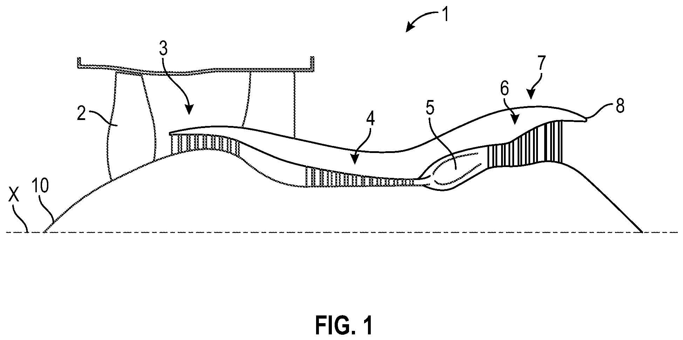

La figure 1 montre une turbomachine 1 à double flux, en particulier d'un aéronef. Cela n'est cependant pas limitatif et la turbomachine peut être d'un autre type, comme par exemple un turbopropulseur.

La turbomachine 1 s'étend suivant un axe longitudinal X et comprend d'amont en aval, dans le sens d'écoulement des gaz, une soufflante 2, un ou plusieurs étage de compresseurs (par exemple un compresseur basse pression 3 et un compresseur haute pression 4), une chambre de combustion 5, un ou plusieurs étages de turbine (par exemple une turbine haute pression 6 et une turbine basse pression 7), et une tuyère d'échappement 8 des gaz. La soufflante 2, le compresseur basse pression 3 et la turbine basse pression 7 sont reliés à un arbre de basse pression s'étendant suivant un axe longitudinal. Le compresseur haute pression 4 et la turbine haute pression 6 sont reliés à un arbre haute pression ménagé autour de l'arbre basse pression. La turbine basse pression 7 entraîne l'arbre basse pression en rotation, tandis que la turbine haute pression 6 entraîne l'arbre haute pression en rotation.

La turbomachine 1 comprend en outre, en amont de la soufflante 2, un cône d'entrée d'air 10, 10' qui est monté sur la soufflante 2 par l'intermédiaire d'une virole (non représentée), de préférence par des fixations de type boulons. La virole est ménagée en aval du cône d'entrée 10, 10' et cette virole est également reliée à l'arbre basse pression.

Le cône d'entrée 10, 10' avec la virole sont reliées au rotor, autrement dit aux parties tournantes de la turbomachine 1. Le cône d'entrée 10, 10' tourne donc autour de l'axe longitudinal X.

Les figures 2a, 2b, 2c et 3 illustre le cône d'entrée 10' de l'art antérieur, tel que décrit précédemment, dans l'arrière-plan technique de la présente demande.

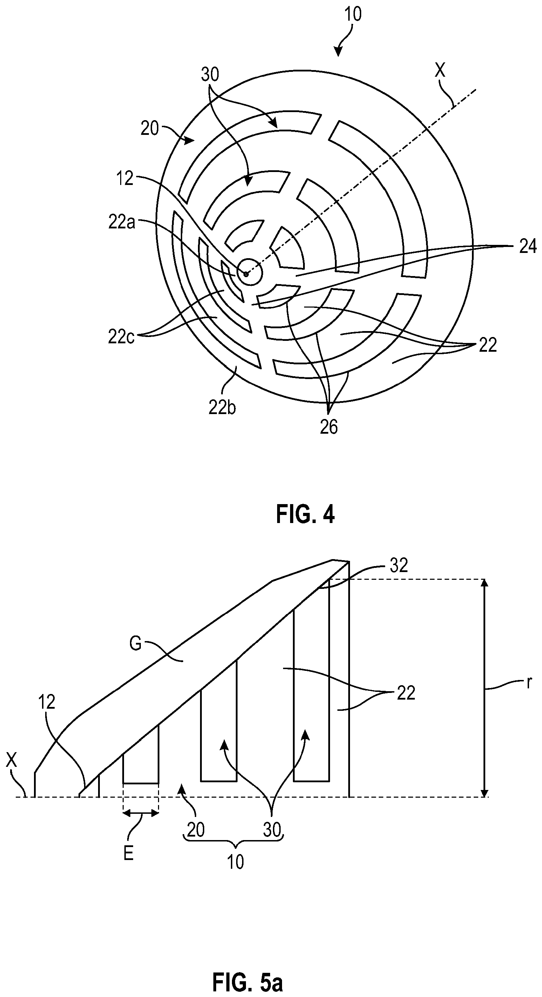

La figure 4 représente un cône d'entrée 10 selon l'invention. Ce cône 10 est configuré, d'une part, pour être entraîné en rotation autour de l'axe X, et d'autre part, pour fragmenter la glace accrétée sur le cône 10 en plusieurs morceaux de taille calibrée de façon à ne pas endommager notamment des aubes de la soufflante 2.

Pour cela, le cône 10 comprend un corps de forme conique s'étendant autour d'un axe de révolution. Cet axe de révolution du cône 10 correspond à l'axe X de la turbomachine.

Le corps du cône 10 comprend une première portion 20 réalisée dans un premier matériau appelé matériau rigide.

La première portion 20 se présente sous la forme d'une pièce unique et monobloc. La première portion 20 est formée par une pluralité de tronçons axiaux 22 qui sont reliés entre eux par des cloisons 24. Les cloisons 24 s'étendent suivant une direction longitudinale par rapport à l'axe X. La pluralité de tronçon axiaux 22 peut être formée d'au moins un tronçon amont 22a et un tronçon aval 22b. Le tronçon amont 22a présente un diamètre inférieur à celui du tronçon aval 22b. La pluralité de tronçon 22 peut également comprendre un à plusieurs tronçons intermédiaire 22c intercalés entre les tronçons amont 22a et aval 22b. Chaque tronçon intermédiaire 22c présente un diamètre, d'une part, inférieur à celui du tronçon aval 22b, et d'autre part, supérieur à celui du tronçon amont 22a.

Sur l'exemple de la figure 4, chaque tronçon 22 comprend autant de secteurs que de cloisons 26 auquel il est relié. Chaque secteur du tronçon s'étend entre deux cloisons adjacentes.

La pluralité de tronçons axiaux 22 et les cloisons 24 délimitent entre eux des logements 26. Chaque logement 26 peut être une ouverture. Sur l'exemple, chaque logement 26 peut présenter une forme générale en arc de cercle par rapport à l'axe X.

Le premier matériau peut être un matériau métallique (tel que de l'aluminium) ou un matériau composite.

Le corps du cône 10 comprend en outre plusieurs secondes portions 30 réalisées chacune dans un second matériau appelé matériau souple. Le second matériau a une dureté inférieure à celle du premier matériau. Par exemple, la dureté des matériaux est définie par le module de Young.

Chaque seconde portion 30 peut présenter un module de Young comprise entre 1 et 10 MPa. De préférence, le module de Young des secondes portions 30 est comprise entre 1 et 4 MPa.

Chaque seconde portion 30 peut présenter une densité comprise entre 500 et 1500 Kg/m³. De préférence, la densité est de 1200 Kg/m³.

Le second matériau peut être un élastomère, une silicone, un caoutchouc ou un polytétrafluoroéthylène (PTFE).

Le cône 10 peut présenter un rayon maximal de 50cm.

Sur l'exemple de la figure 4, chaque seconde portion 30 est un secteur angulaire. Chaque secteur angulaire peut être compris entre 5 et 345°. Le secteur angulaire est de préférence compris entre 5 et 180°. Encore plus préférentiellement, le secteur angulaire est compris entre 10 et 90°.

Les secondes portions 30 sont situées dans les logements 26 de la première portion 20. Sur l'exemple, les secondes portions 30 sont distantes et séparées l'une des autres par au moins un des tronçons 22 et/ou cloisons 26. Ceci confère au corps du cône 10 un motif alterné, en particulier entre les tronçons 22 de la première portion 20 et les secondes portions 30 (suivant une direction longitudinale par rapport à l'axe X).

Chaque seconde portion 30 présente une forme complémentaire à celle du logement 26 correspondant. Ainsi, les secondes portions 30 sont configurées pour combler complètement les logements.

Chacune des secondes portions 30 peut présenter une épaisseur E maximale de 2 à 10 mm, de préférence l'épaisseur est de 4mm. L'épaisseur E est mesurée dans une direction longitudinale par rapport à l'axe X (figure 5a). La direction radiale est sensiblement perpendiculaire à l'axe X.

Chacune des secondes portions 30 comprend une surface externe 32 pouvant avoir un rayon r maximal de 20 à 100 mm, de préférence un rayon de 40mm. Le rayon r est mesuré dans une direction radiale par rapport à l'axe X (figure 5a).

Le corps de cône 10 peut comprendre une extrémité formant une pointe 12.

Sur l'exemple, la pointe 12 est réalisée dans le second matériau. En variante, la pointe 12 est réalisée dans le premier matériau, dans lequel la pointe 12 et la première portion 20 sont monoblocs.

Le motif alterné entre les premier et second matériaux selon l'invention peut être applicable à tout type de cône d'entrée d'air d'une turbomachine, tout en adaptant les angles et longueurs de la pointe en fonction des dimensions du cône d'entrée. Par ailleurs, la dureté du second matériau, est un paramètre pouvant être variable en fonction de la vitesse de rotation, de l'angle d'attaque et des dimensions du cône d'entrée.

Selon d'autres variantes non illustrées, les logements 26 peuvent être une rainure hélicoïdale et les secondes portions 30 peuvent avoir une configuration en spirale, ou des rainures longitudinales et les secondes portions 30 peuvent avoir une forme rectiligne. Ces variantes permettent également de réaliser d'autres motifs de façon à obtenir une alternance entre les premier et second matériaux sur le corps du cône.

De manière générale, les secondes portions 30 sont aptes à se déformer élastiquement en direction radiale lors de l'entraînement en rotation du cône 10. Ceci permet de générer des contraintes dans la glace formée à l'interface des matériaux rigide et souple, de façon à fragmenter la glace en plusieurs morceaux de taille calibrée et acceptable pour un impact des aubes de soufflante 2.

En référence aux figures 5a à 5c, la présente demande décrit la fragmentation de la glace conférée par la configuration spécifique du cône 10 de l'invention.

En régime stabilisé de la turbomachine (c'est-à-dire à une vitesse d'au plus de 3000 tours/minute), tel qu'illustré sur la figure 2a, de la glace G se forme sur la surface externe du cône d'entrée 10. Lorsque le cône 10 est mis en rotation à une seconde vitesse V2 par la turbomachine, on n'observe pas de mouvement relatif entre les matériaux rigide et souple. Les secondes portions 30 sont donc immobiles.

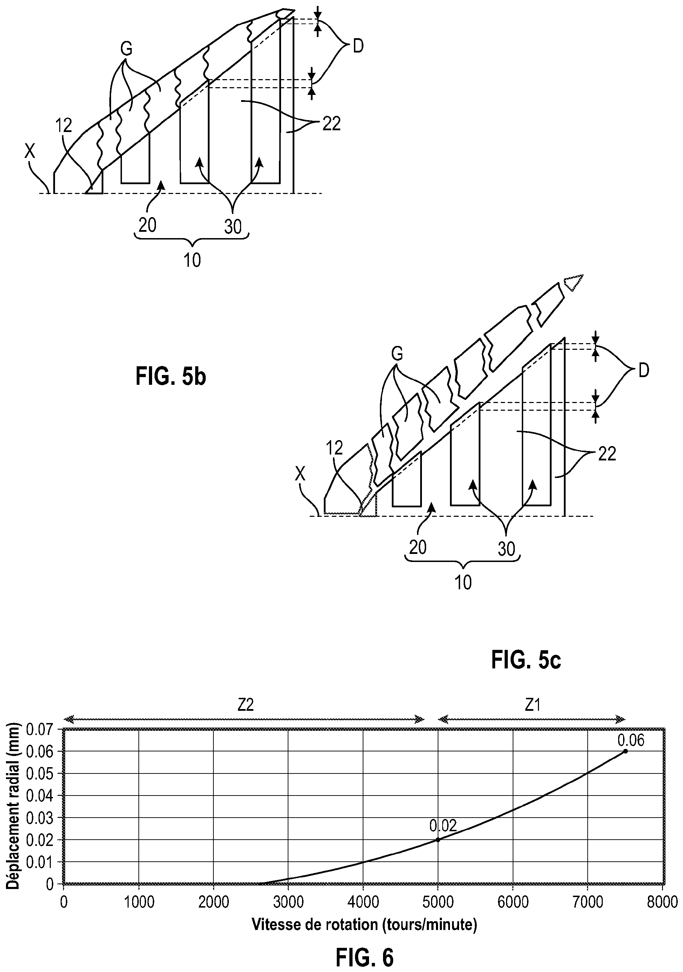

Lorsque le cône 10 est mis en rotation à une première vitesse V1 par la turbomachine, tel qu'illustré sur la figure 5b, on observe un écart de déformation D (ou déplacement) sous force centrifuge des secondes portions 30 par rapport à la première portion 20 suivant une direction radiale par rapport à l'axe X. Cet écart génère des fissures qui fragmentent la glace G à l'interface des matériaux rigide et souple. Ceci permet de fragmenter la glace G en plusieurs petits morceaux.

Sur la figure 5c est illustré, le détachement des morceaux de glace avec une taille réduite et acceptable pour ne pas endommager les composants en aval du cône 10.

La première vitesse V1 peut être au moins de 5000 tours/minutes et la seconde vitesse V2 peut être inférieure à 5000 tours/minute.

L'écart de déformation D (ou le déplacement radial) des secondes portions est supérieur à 0,02 mm. De préférence, l'écart est compris entre 0,02 et 0,20 mm.

La dimension (forme, épaisseur, taille, dureté, etc.) et la position sur le corps du cône 10 des logements 26 de la première portion 20 et des secondes portions 30 peuvent varier en fonction de la taille souhaitée des morceaux de glace à fragmenter et du type du cône d'entrée.

Lorsque le cône 10 tourne à la seconde vitesse V2, une manœuvre d'accélération de la turbomachine peut être mise en place de façon à réaliser le déplacement radial souhaité des secondes portions et obtenir une fragmentation de la glace.

Avantageusement, le déplacement radial D des secondes portions 30 du cône 10 est proportionnel à au moins un des paramètres de dimensionnement suivants :
- au carré de la vitesse de rotation du cône 10,
- au carré de l'épaisseur des secondes portions 30,
- à la dureté du second matériau, et
- à la distance des secondes portions 30 par rapport à l'axe X.

Ainsi, au moins un des paramètres de dimensionnement précités est modifié pour obtenir un déplacement radial de minimum 0,02mm sur chacune des secondes portions 30 et rompre une épaisseur radiale maximale de glace de 15mm sur le cône 10, tel que résumé sur le tableau suivant (Table 1) à titre d'exemple.

**[Table 1]**

| | Configuration de référence | Régime plus faible et Epaisseur E modifié | Régime plus faible et Module de Young du second matériau modifié | Rayon r plus élevé et Epaisseur E de la seconde portion souple modifié | Rayon r plus élevé et Module de Young du second matériau modifié |
|---|---|---|---|---|---|
| Régime de la turbomachine (tours/minute) | 5000 | 37500 | 37500 | 5000 | 5000 |
| Module de Young du second matériau (Mpa) | 2,8 | 2,8 | 1,6 | 2,8 | 1,4 |
| Epaisseur radiale E seconde portion souple (mm) | 4,0 | 5,3 | 4,0 | 2,8 | 4,0 |
| Rayon r de la seconde portion souple (mm) | 40 | 40 | 40 | 80 | 80 |
| Densité de la seconde portion souple (Kg/m³) | 1200 | 1200 | 1200 | 1200 | 1200 |

A titre d'exemple, le déplacement radial des secondes portions 30 du cône 10 de l'invention est mesuré en fonction du régime de la turbomachine.

Pour cela, le cône 10 de rayon maximal de 40mm comprend une première portion 20 réalisée en métal (tel que l'aluminium) et des secondes portions 30 réalisées en élastomère avec une dureté Shore A de 50 (à une température de 23°C). Les déplacements radiaux des secondes portions sont mesurés sous effort centrifuge et selon la présence ou l'absence de glace à 5000 et 7500 tours/minutes. Par exemple, l'épaisseur radiale de la glace formée sur le cône est d'environ 10mm.

Ces mesures du déplacement radial des secondes portions 30 sont résumées sur le tableau suivant (Table 2).

**[Table 2]**

| Régime de la turbomachine (tours/minute) | Présence de glace sur le cône d'entrée | Déplacements radiaux mesurés à l'interface des matériaux rigide et souple (mm) | Déplacements radiaux maximaux mesurés (mm) |
|---|---|---|---|
| 5000 | Sans glace | 0,02 | 0,06 |
| | Avec glace | 0,08 | 0,15 |
| 7500 | Sans glace | 0,06 | 0,14 |
| | Avec glace | 0,14 | 0,34 |

A titre d'exemple, la figure 6 illustre l'effet du déplacement radial des secondes portions 30 du cône 10 de l'invention sur la fragmentation de glace accrétée sur le cône 10 (en particulier, à l'interface entre des matériaux rigide et souple), est déterminé en fonction des différents régimes de rotation du cône 10 (et par conséquent de la turbomachine).

Pour cela, le cône 10 comprend une première portion 20 réalisée en métal (tel que l'aluminium) et des secondes portions 30 réalisées en élastomère. L'élastomère présente une dureté Shore A de 50 (à une température de 23°C) et une densité de 1200 Kg/m³. Les secondes portions 30 ont une épaisseur de 4mm. La seconde portion 30 du corps du cône ayant une surface externe de plus grand diamètre, présente un rayon de 40mm.

Le régime nul correspond au cône à l'arrêt, le régime stabilité correspond sensiblement à 3000 tours/minute et le régime maximal (correspondant à une phase d'accélération) est sensiblement à 7500 tours/minute.

Sur la figure 6, la zone Z1 correspond aux déplacements radiaux des secondes portions du cône, dans lesquels on observe une fragmentation et un détachement des morceaux de glace avec une taille réduite et acceptable. Cette zone Z1 s'étend entre 0,02 et 0, 06mm. On observe donc une fragmentation nette de la glace à l'interface entre les matériaux rigide et souple, à partir d'un déplacement radial de 0, 02mm.

Sur la figure 6, la zone Z2 correspond à un déplacement minimal ou sans déplacement radial des secondes portions du cône, dans lesquels on n'observe pas une fragmentation et un détachement des morceaux de glace.

## Revendications

1. Cône d'entrée (10) pour une turbomachine (1) d'aéronef, ce cône d'entrée (10) étant configuré pour être entraîné en rotation autour d'un axe (X) et comportant un corps de forme conique ou elliptique et sur lequel est susceptible de se former de la glace, ledit corps ayant au moins une première portion (20) réalisée dans un premier matériau appelé matériau rigide, et au moins une seconde portion (30) réalisée dans un second matériau qui a une dureté inférieure à celle dudit premier matériau et qui est appelé matériau souple,
**caractérisé en ce que** ladite première portion (20) est monobloc et formée d'une pluralité de tronçons axiaux (22) reliés entre eux par des cloisons (24) s'étendant suivant une direction longitudinale par rapport à l'axe (X), lesdits tronçons (22) et lesdites cloisons (24) définissant entre eux des logements (26), et **en ce que** ledit corps comprend plusieurs secondes portions (30) situées dans lesdits logements (26), ces secondes portions (30) étant configurées pour se déformer élastiquement en direction radiale par rapport à l'axe (X) lors de l'entrainement en rotation du cône (10).

2. Cône d'entrée selon la revendication 1, **caractérisé en ce que** ledit corps comprend une extrémité formant une pointe (12) réalisée dans ledit second matériau.

3. Cône d'entrée selon la revendication 1 ou 2, **caractérisé en ce que** chacun des logements (26) a une forme générale en arc de cercle autour de l'axe (X), et les secondes portions (30) sont configurées pour combler complètement ces logements (26).

4. Cône d'entrée selon l'une des revendications précédentes, **caractérisé en ce que** chacune des secondes portions (30) présente un module de Young comprise entre 1 et 10 MPa, et de préférence de 1 à 4 MPa.

5. Cône d'entrée selon l'une des revendications précédentes, **caractérisé en ce que** chacune des secondes portions (30) présente une épaisseur (E) maximale de 4 mm, l'épaisseur (E) étant mesurée dans une direction longitudinale par rapport à l'axe (X).

6. Cône d'entrée selon l'une des revendications précédentes, **caractérisé en ce que** chacune des secondes portions (30) comprend une surface externe présentant un rayon (r) maximal de 40 mm, le rayon (r) étant mesuré par rapport à l'axe (X).

7. Cône d'entrée selon l'une des revendications précédentes, **caractérisé en ce que** chacune des secondes portions (30) présente une densité comprise entre 500 et 1500 Kg/m³, et de préférence de 1200 Kg/m³.

8. Cône d'entrée selon l'une des revendications précédentes, **caractérisé en ce que** chaque tronçon axial (22) est un secteur angulaire compris entre 10 et 90°.

9. Cône d'entrée selon l'une des revendications précédentes, **caractérisé en ce que** chaque seconde portion (30) est réalisée en élastomère, silicone, caoutchouc ou polytétrafluoroéthylène (PTFE).

10. Cône d'entrée selon l'une des revendications précédentes, **caractérisé en ce que** ladite première portion (20) est réalisée en matériau composite ou métallique, par exemple en aluminium.

11. Turbomachine (1) d'aéronef, comportant un cône d'entrée (10) selon l'une des revendications 1 à 10.

12. Procédé d'utilisation d'une turbomachine (1) selon la revendication précédente, **caractérisé en ce que** ledit cône (10) est mis en rotation soit à une première vitesse (V1) qui est au moins supérieure à 5000 tours/minute, ou à une seconde vitesse (V2) qui est inférieure à ladite première vitesse (V1), et **en ce que** :
- lorsque ledit cône (10) tourne à la première vitesse (V1), les secondes portions (30) sont configurées pour fragmenter de la glace (G) déposée sur le cône (10), en se déplaçant radialement par rapport à l'axe (X), et
- lorsque ledit cône (10) tourne à la seconde vitesse (V2) ou est à l'arrêt, les secondes portions (30) sont immobiles.

13. Procédé selon la revendication 12, **caractérisé en ce que** le déplacement radial desdites portions souples est supérieur à 0,02 mm, et de préférence compris entre 0,02 et 0,20 mm.

## Patentansprüche

1. Einlasskegel (10) für eine Turbomaschine (1) eines Luftfahrzeugs, wobei der Einlasskegel (10) so konfiguriert ist, dass er um eine Achse (X) gedreht werden kann, und einen konischen oder elliptischen Körper aufweist, an dem sich Eis bilden kann, wobei der Körper mindestens einen ersten Abschnitt (20) aufweist, der in einem ersten Material, genannt starres Material, ausgeführt ist, und mindestens einen zweiten Abschnitt (30) aufweist, der in einem zweiten Material ausgeführt ist, das eine geringere Härte als das erste Material aufweist und genannt wird weiches Material,
**dadurch gekennzeichnet, dass** der erste Abschnitt (20) einstückig ist und eine Vielzahl axialer Segmente (22) umfasst, die durch Wände (24) miteinander verbunden sind, die sich in einer longitudinalen Richtung in Bezug auf die Achse (X) erstrecken, wobei die Segmente (22) und die Wände (24) zwischen sich Gehäuse (26) definieren, und dass der Körper mehrere zweite Abschnitte (30) aufweist, die in den Gehäusen (26) angeordnet sind, wobei diese zweiten Abschnitte (30) konfiguriert sind, um sich bei Antrieb des Konus (10) in Rotation elastisch in radialer Richtung in Bezug auf die Achse (X) zu verformen.

2. Einlasskegel nach Anspruch 1, **dadurch gekennzeichnet, dass** der besagte Körper ein Ende, das eine Spitze (12) bildet, umfasst, das in dem zweiten Material ausgeführt ist.

3. Einlasskegel nach Anspruch 1 oder 2, **dadurch gekennzeichnet, dass** jedes der Gehäuse (26) eine allgemeine Form als Kreisbogen um die Achse (X) aufweist und die zweiten Abschnitte (30) so konfiguriert sind, dass sie diese Gehäuse (26) vollständig ausfüllen.

4. Einlasskegel nach einem der vorstehenden Ansprüche, **dadurch gekennzeichnet, dass** jeder der zweiten Abschnitte (30) ein Elastizitätsmodul zwischen 1 und 10 MPa, und bevorzugt von 1 bis 4 MPa, aufweist.

5. Einlasskegel nach einem der vorstehenden Ansprüche, **dadurch gekennzeichnet, dass** jeder der zweiten Abschnitte (30) eine maximale Dicke (E) von 4 mm aufweist, wobei die Dicke (E) in einer longitudinalen Richtung in Bezug auf die Achse (X) gemessen wird.

6. Einlasskegel nach einem der vorstehenden Ansprüche, **dadurch gekennzeichnet, dass** jeder der zweiten Abschnitte (30) eine Außenfläche umfasst, die einen maximalen Radius (r) von 40 mm aufweist, wobei der Radius (r) in Bezug auf die Achse (X) gemessen wird.

7. Einlasskegel nach einem der vorstehenden Ansprüche, **dadurch gekennzeichnet, dass** jeder der zweiten Abschnitte (30) eine Dichte zwischen 500 und 1500 Kg/m³, und bevorzugt 1200 Kg/m³ aufweist.

8. Einlasskegel nach einem der vorstehenden Ansprüche, **dadurch gekennzeichnet, dass** jedes axiale Segment (22) ein Kreissektor mit einem Öffnungswinkel zwischen 10 und 90° ist.

9. Einlasskegel nach einem der vorstehenden Ansprüche, **dadurch gekennzeichnet, dass** jeder zweite Abschnitt (30) in Elastomer, Silikon, Kautschuk oder Polytetrafluorethylen (PTFE) ausgeführt ist.

10. Einlasskegel nach einem der vorstehenden Ansprüche, **dadurch gekennzeichnet, dass** der erste Abschnitt (20) in Verbundwerkstoff oder Metall, beispielsweise Aluminium, ausgeführt ist.

11. Turbomaschine (1) eines Luftfahrzeugs, das einen Einlasskegel (10) nach einem der Ansprüche 1 bis 10 aufweist.

12. Verfahren zur Verwendung eine Turbomaschine (1) nach dem vorstehenden Anspruch, **dadurch gekennzeichnet, dass** der besagte Kegel (10) entweder mit einer ersten Drehzahl (V1), die mindestens größer als 5000 Umdrehungen pro Minute ist, oder mit einer zweiten Drehzahl (V2), die geringer als die erste Drehzahl (V1) ist, in Rotation versetzt wird, und dass:
- wenn der besagte Kegel (10) mit der ersten Drehzahl (V1) rotiert, die zweiten Abschnitte (30) so konfiguriert sind, dass sie auf dem Kegel (10) abgelagertes Eis (G) fragmentieren, indem sie sich radial in Bezug auf die Achse (X) bewegen, und
- wenn der besagte Kegel (10) mit der zweiten Drehzahl (V2) rotiert oder sich im Stillstand befindet, die zweiten Abschnitte (30) unbeweglich sind.

13. Verfahren nach Anspruch 12, **dadurch gekennzeichnet, dass** die radiale Bewegung der besagten weichen Abschnitte größer als 0,02 mm, und bevorzugt zwischen 0,02 und 0,20 mm, ist.

## Claims

1. An inlet cone (10) for an aircraft turbomachine (1), this inlet cone (10) being configured so as to be driven in rotation about an axis (X) and comprising a body of conical or elliptical shape and on which ice is capable of forming, said body having at least one first portion (20) made of a first material referred to as rigid material, and at least one second portion (30) made of a second material which has a hardness less than that of said first material and which is referred to as flexible material,
**characterised in that** said first portion (20) is monobloc and formed by a plurality of axial sections (22) connected together by partitions (24) extending in a longitudinal direction relative to the axis (X), said sections (22) and said partitions (24) defining between them housings (26), and **in that** said body comprises a plurality of second portions (30) located in said housings (26), these second portions (30) being configured to deform elastically in the radial direction with respect to the axis (X) when the cone (10) is driven in rotation.

2. The inlet cone as claimed in claim 1, **characterised in that** said body comprises an end forming a tip (12) made of said second material.

3. The inlet cone as claimed in claim 1 or 2, **characterised in that** each of the housings (26) has a generally arcuate shape about the axis (X), and the second portions (30) are configured to fill these housings (26) completely.

4. The inlet cone according to one of the preceding claims, **characterised in that** each of the second portions (30) has a Young's modulus of between 1 and 10 MPa, and preferably from 1 to 4 MPa.

5. The inlet cone according to one of the preceding claims, **characterised in that** each of the second portions (30) has a maximum thickness (E) of 4 mm, the thickness (E) being measured in a longitudinal direction with respect to the axis (X).

6. The inlet cone according to one of the preceding claims, **characterised in that** each of the second portions (30) comprises an external surface with a maximum radius (r) of 40 mm, the radius (r) being measured with respect to the axis (X).

7. The inlet cone according to one of the preceding claims, **characterised in that** each of the second portions (30) has a density of between 500 and 1500 Kg/m³, and preferably 1200 Kg/m³.

8. The inlet cone according to one of the preceding claims, **characterised in that** each axial section (22) is an angular sector of between 10 and 90°.

9. The inlet cone according to one of the preceding claims, **characterised in that** each second portion (30) is made of elastomer, silicone, rubber or polytetrafluoroethylene (PTFE).

10. The inlet cone according to one of the preceding claims, **characterised in that** said first portion (20) is made of composite or metallic material, for example aluminium.

11. An aircraft turbomachine (1) comprising an inlet cone (10) according to one of claims 1 to 10.

12. A method for using a turbomachine (1) according to the preceding claim, **characterised in that** said cone (10) is rotated either at a first speed (V1) which is at least greater than 5000 rpm, or at a second speed (V2) which is lower than said first speed (V1), and **in that**:
- when said cone (10) rotates at the first speed (V1), the second portions (30) are configured to fragment ice (G) deposited on the cone (10), moving radially with respect to the axis (X), and
- when said cone (10) is rotating at the second speed (V2) or at a standstill, the second portions (30) are immobile.

13. The method according to claim 12, **characterised in that** the radial displacement of said flexible portions is greater than 0.02 mm, and preferably between 0.02 and 0.20 mm.
